# EUROPEAN PATENT APPLICATION

(11) **EP 1 505 084 A1**
(43) Date of publication of application: **09.02.2005**
(21) Application number: 03725736.7
(22) Date of filing: 02.05.2003
(51) Int. Cl.: C08F 4/658

(54) **SOLID CATALYST COMPONENT FOR OLEFIN POLYMERIZATION, CATALYST FOR OLEFIN POLYMERIZATION AND METHOD FOR PRODUCING OLEFIN POLYMER**

(30) Priority: 10.05.2002 JP 2002135469; 10.05.2002 JP 2002135470
(71) Applicant: IDEMITSU KOSAN CO., LTD., Tokyo 100-8321 (JP)
(72) Inventor: TANASE, Shojiro, Ichihara-shi, Chiba 299-0107 (JP); SADASHIMA, Takanori, Ichihara-shi, Chiba 299-0107 (JP); YABUNOUCHI, Nobuhiro, Ichihara-shi, Chiba 299-0107 (JP); KURAMOTO, Masahiko, Ichihara-shi, Chiba 299-0107 (JP); FUNABASHI, Hideo, Ichihara-shi, Chiba 299-0107 (JP)
(74) Representative: Gille Hrabal Struck Neidlein Prop Roos
(86) International application number: PCT/JP2003/005615
(87) International publication number: WO 2003/095504

(57) **Abstract**

A solid catalyst component for olefin polymerization, which is obtained by reacting the following compounds (a), (b) and (d), or the following compounds (a), (b), (c) and (d),
(a) a halogen-containing titanium compound,
(b) an alkoxylated magnesium compound,
(c) a halogen-containing silicon compound,
(d) electron-donating compound(s) represented by the following general formula (I) and/or general formula (II), 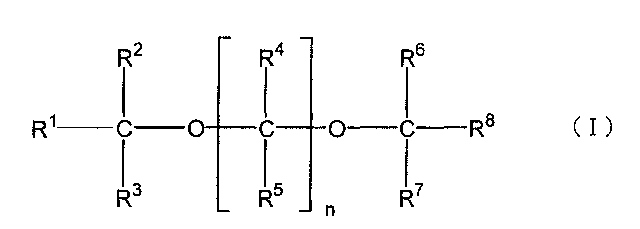
wherein n is an integer of 2 to 10, each of R¹ to R⁸ is a substituent having at least one element selected from carbon, hydrogen, oxygen, halogen, nitrogen, sulfur, phosphorus, boron or silicon, any substituents of R¹ to R⁸ may together form a ring other than a benzene ring, 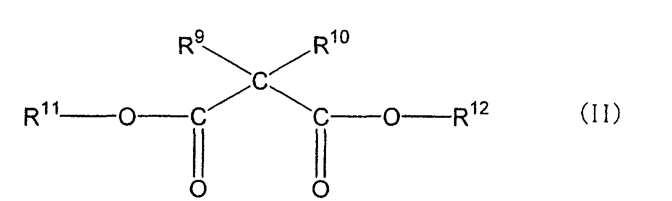 wherein each of R⁹ to R¹² is independently a linear, branched or cyclic alkyl group, or an arylalkyl group, having 1 to 20 carbon atoms, provided that the total sum of carbon atoms of R⁹ and R¹⁰ is 3 to 40.

## Description

### Technical Field

The present invention relates to a solid catalyst component for olefin polymerization for producing an α-olefin homopolymer or copolymer, a catalyst for olefin polymerization and a method for producing an olefin polymer.

### Background Art

Generally, an olefin polymer is produced by polymerization in the presence of a Ziegler-Natta catalyst containing a titanium compound and an organic aluminum compound. For example, in the production of a polypropylene that is one of olefin polymers, an isotactic polypropylene is obtained mainly in the presence of a catalyst containing a solid catalyst component formed from titanium, magnesium, chlorine and an electron-donating compound; an organic aluminum compound as a co-catalyst component; and an organosilicon compound having an alkoxy group as a stereoregularity improver. However, attempts are presently made to attain an improvement in the catalytic activity during the polymerization, an improvement in stereoregularity of an olefin polymer and an improvement in the form of a polymer powder for stable production of an olefin polymer.

For example, for improving an olefin polymer in the morphology including a particle diameter, form, etc., JP-A-63-280707 discloses a method in which a magnesium compound is supported on an inorganic oxide such as silica, or JP-A-58-000811 discloses a method in which a magnesium compound is once dissolved in a solvent such as an alcohol to precipitate it and the resultant precipitate is used.

However, these methods include very complicated steps, since they essentially require the procedures of supporting, dissolving and precipitating a magnesium compound. Further, these methods have a defect that the catalyst is poor in stability of performance since the catalytic activity is high only at an early stage of the polymerization or that the catalyst cannot exhibit sufficient performances from the viewpoint of catalytic activity during the polymerization and stereoregularity of an olefin polymer.

For overcoming these defects, therefore, JP-A-2-413883 discloses a method in which a reaction product from metal magnesium, an alcohol and a specific amount of a halogen is used as a carrier for a catalyst, and JP-B-7-025822 discloses a method for producing an olefin polymer, which method uses a Ziegler-Natta catalyst containing a solid catalyst component obtained by adding an organic acid ester to a reaction product from alkoxymagnesium, a halogenating agent and alkoxytitanium and further reacting the resultant product with a halogenated titanium. In these methods, however, the catalytic activity during the polymerization and the stereoregularity of an olefin polymer are still not sufficient.

Further, JP-A-11-269218 discloses a solid catalyst component for olefin polymerization, obtained by contacting a magnesium compound and a titanium compound to each other in the presence of an electron-donating compound at a temperature of at least 120°C but not higher than 150°C and washing the resulting reaction product with an inert solvent at a temperature of at least 100°C but not higher than 150°C. The decrease in its catalytic activity with the passage of time during polymerization can be suppressed and an olefin polymer is improved in stereoregularity.

However, the above catalyst is not necessarily sufficient in polymerization activity, and a further improvement is required in this point.

On the other hand, JP-A-4-96910 discloses a solid catalyst component obtained by contacting an alkoxymagnesium compound, a polyether compound and a titanium compound. However, an olefin polymer obtained in the presence of a catalyst containing the above solid catalyst component is sufficient in the morphology of a polymer powder, polymerization activity and stereoregularity.

Further, Japanese National Publication No. 2000-516987 of Translation Version of PCT Application and Japanese National Publication No. 2000-516989 of Translation Version of PCT Application disclose malonic esters overlapping an electron-donating compound used in the present invention. However, these Japanese National Publications do not disclose any specific alkoxylated magnesium compound used in the present invention, and their catalysts are not necessarily sufficient in polymerization activity.

It is an object of the present invention to provide a solid catalyst component for olefin polymerization, which has high polymerization activity and gives an olefin polymer excellent in stereoregularity and powder morphology, a catalyst for olefin polymerization and a method for producing an olefin polymer.

For achieving the above object, the present inventors have made diligent studies and as a result have found that the above object can be accomplished by using a solid catalyst component for olefin polymerization, obtained by reacting a halogen-containing titanium compound, a specific alkoxylated magnesium compound and a specific electron-donating compound, and the present invention has been accordingly completed.

### Disclosure of the Invention

According to the present invention, the following solid catalyst components for olefin polymerization are provided.
[1] A solid catalyst component for olefin polymerization, which is obtained by reacting the following compounds (a), (b) and (d), or the following compounds (a), (b), (c) and (d),
   (a) a halogen-containing titanium compound,
   (b) an alkoxylated magnesium compound obtained by reacting metal magnesium, an alcohol and a halogen and/or halogen-containing compound containing at least 0.0001 gram atom, per mole of said metal magnesium, of a halogen atom,
   (c) a halogen-containing silicon compound,
   (d) electron-donating compound(s) represented by the following general formula (I) and/or general formula (II), 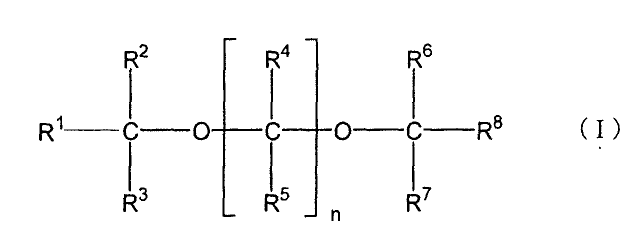
   wherein n is an integer of 2 to 10, each of R¹ to R⁸ is independently a substituent having at least one element selected from carbon, hydrogen, oxygen, halogen, nitrogen, sulfur, phosphorus, boron or silicon, any substituents of R¹ to R⁸ may together form a ring other than a benzene ring, and a main chain may contain an atom other than carbon, 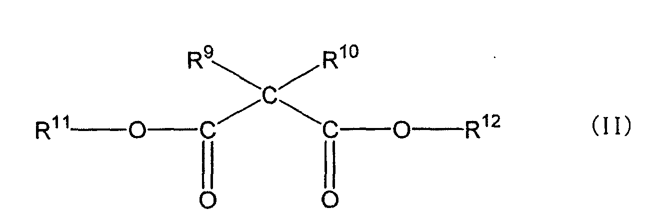 wherein each of R⁹ to R¹² is independently a linear, branched or cyclic alkyl group, or an arylalkyl group, having 1 to 20 carbon atoms, provided that the total sum of carbon atoms of R⁹ and R¹⁰ is 3 to 40.
[2] A solid catalyst component for olefin polymerization as recited in [1], wherein said halogen is iodine.
[3] A solid catalyst component for olefin polymerization as recited in [1] or [2], wherein said halogen-containing compound is magnesium chloride.
[4] A solid catalyst component for olefin polymerization as recited in any one of [1] to [3], wherein said metal magnesium, the alcohol and the halogen and/or halogen-containing compound are reacted at a temperature of 30 to 90°C.
[5] A solid catalyst component for olefin polymerization as recited in [4], wherein said metal magnesium, the alcohol and the halogen and/or halogen-containing compound are reacted at a temperature of 30 to 60°C.
[6] A solid catalyst component for olefin polymerization as recited in any one of [1] to [5], wherein said halogen-containing silicon compound (c) is silicon tetrachloride.
[7] A solid catalyst component for olefin polymerization as recited in any one of [1] to [6], wherein the compound of said general formula (I) is a 1,3-diether compound.
[8] A solid catalyst component for olefin polymerization as recited in any one of [1] to [7], wherein the compound of said general formula (II) is a compound of the followinq qeneral formula (III), 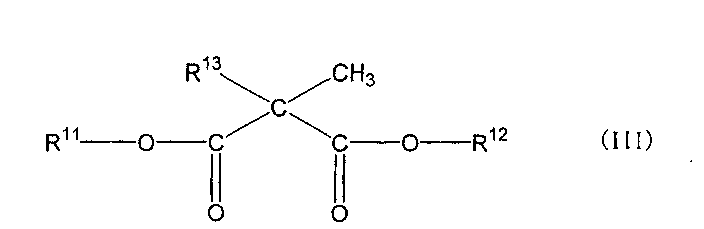 wherein R¹¹ and R¹² are as defined in said general formula (II), and R¹³ is a linear, branched or cyclic alkyl group having 2 to 20 carbon atoms.
[9] A solid catalyst component for olefin polymerization as recited in any one of [1] to [8], wherein said compound (a) is contacted after said compound (b) and said compound (d) are contacted to each other when said compounds (a), (b) and (c) are reacted.
[10] A solid catalyst component for olefin polymerization as recited in any one of [1] to [8], wherein said compound (d) is contacted after said compound (b) and said compound (c) are contacted to each other and then said compound (a) is contacted when said compounds (a), (b), (c) and (d) are reacted.
[11] A catalyst for olefin polymerization, comprising the following components [A] and [B], or the following components [A], [B] and [C],
   [A] the solid catalyst component for olefin polymerization recited in any one of [1] to [10],
   [B] an organic aluminum compound, and
   [C] an electron-donating compound.
[12] A method for producing an olefin polymer, which comprises polymerizing an olefin in the presence of the catalyst for olefin polymerization recited in [11].

### Brief Description of Drawings

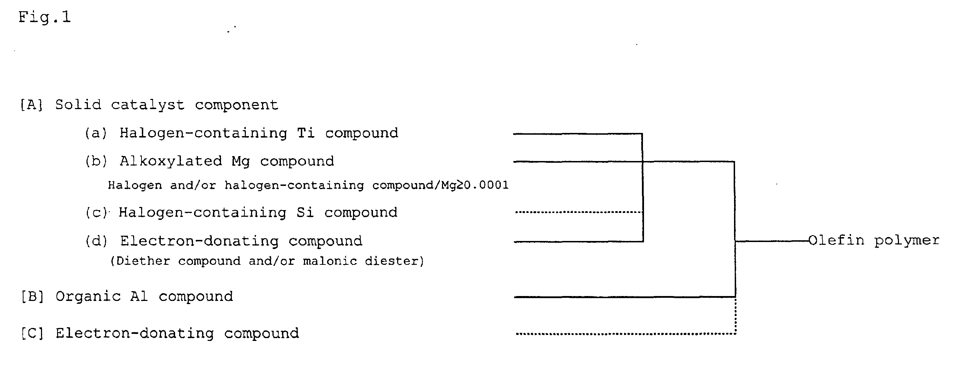

Fig. 1 is a schematic drawing for showing the catalyst for olefin polymerization and the method for producing an olefin polymer, provided by the present invention.

### Best Mode for Carrying out the Invention

The catalyst components, the production method, the polymerization method, etc., in the present invention will be explained below. The embodiments shown below are preferred embodiments, and the present invention shall not be limited thereto.

### 1. Catalyst component

### [A] Solid catalyst component for olefin polymerization

### (a) Halogen-containing titanium compound

As a halogen-containing titanium compound, a compound of the following general formula (IV) can be preferably used.

TiX¹ ₚ(OR¹⁴)₄₋ₚ (IV)

In the above general formula (IV), X¹ is a halogen atom, and above all, a chlorine atom and a bromine atom are preferred. A chlorine atom is particularly preferred. R¹⁴ is a hydrocarbon group. It may be any one of a saturated group and an unsaturated group, it may be a linear, branched or cyclic group, and further, it may contain hetero atom(s) such as sulfur, nitrogen, oxygen, silicon, phosphorus, etc. Of them, a hydrocarbon group having 1 to 10 carbon atoms is preferred. Particularly, an alkyl group, an alkenyl group, a cycloalkenyl group, an aryl group and an aralkyl group are preferred, and a linear or branched alkyl group is particularly preferred. When a plurality of OR¹⁴S are present, they may be identical or different. Specific examples of R¹⁴ include methyl, ethyl, n-propyl, isopropyl, n-butyl, sec-butyl, isobutyl, n-pentyl, n-hexyl, n-heptyl, n-octyl, n-decyl, allyl, butenyl, cyclopentyl, cyclohexyl, cyclohexenyl, phenyl, tolyl, benzyl and phenethyl. p represents an integer of 1 to 4.

Specific examples of the halogen-containing titanium compound of the above general formula (IV) include titanium tetrahalides such as titanium tetrachloride, titanium tetrabromide and titanium tetraiodide; alkoxytitanium trihalides such as methoxytitanium trichloride, ethoxytitanium trichloride, propoxytitanium trichloride, n-butoxytitanium trichloride and ethoxytitanium tribromide; dialkoxytitanium dihalides such as dimethoxytitanium dichloride, diethoxytitanium dichloride, diisopropoxytitanium dichloride, di-n-propoxytitanium dichloride and diethoxytitanium dibromide, and trialkoxytitanium monohalides such as trimethoxytitanium chloride, triethoxytitanium chloride, triosopropoxytitanium chloride, tri-n-propoxytitanium chloride and tri-n-butoxytitanium chloride. Of them, highly halogenated titanium compounds are preferred, and titanium tetrachloride is particularly preferred, in view of polymerization activity. These halogen-containing titanium compounds may be used singly or in combination of at least two members thereof.

### (b) Alkoxylated magnesium compound

As an alkoxylated magnesium compound (b), the present invention uses a compound obtained by reacting metal magnesium, an alcohol and a halogen and/or halogen-containing compound containing at least 0.001 gram atom, per mole of the metal magnesium, of a halogen atom generally at 30 to 90°C, preferably at 30 to 60°C, from the viewpoint of the powder form of an olefin polymer, the polymerization activity of the catalyst and stereoregularity.

Although the reaction temperature is not critical, the reaction is preferably carried out in the above temperature range since the powder morphology of an olefin polymer or the polymerization activity of the catalyst may be improved.

The form of the metal magnesium is not specially limited, so that metal magnesium having any particle diameter, such as metal magnesium in the form of particles, ribbons, a powder, or the like can be used. Further, the surface state of the metal magnesium is not specially limited, either, while metal magnesium free of a coating of magnesium hydroxide, etc., formed on the surface thereof is preferred.

The alcohol is preferably selected from lower alcohols having 1 to 6 carbon atoms. Particularly, when ethanol is used, preferably, there is obtained a solid product that improves the catalyst greatly in the exhibition of catalyst performances. While the purity and water content of the alcohol is not specially limited, a coating of magnesium hydroxide is formed on the metal magnesium surface when an alcohol having a large water content is used. It is therefore preferred to use an alcohol having a water content of 1 % or less, and it is particularly preferred to use an alcohol having a water content of 2,000 ppm or less. For obtaining better morphology, further, the smaller the water content is, the more preferred such an alcohol is. Generally, the water content is desirably 200 ppm or less.

The halogen can be selected from chlorine, bromine or iodine, and it is particularly preferred to use iodine.

As a halogen atom in the halogen-containing compound, chlorine, bromine or iodine is preferred. Of halogen-containing compounds, further, a halogen-containing metal compound is particularly preferred. Specifically, the halogen-containing compound can be suitably selected from MgCl₂, Mgl₂, Mg(OEt)Cl, Mg(OEt)I, MgBr₂, CaCl₂, NaCl, KBr, or the like, and of them, MgCl₂ is particularly preferred. The halogen-containing compound is not specially limited in state, form, particle size, etc., and a compound of any type may be used. For example, a solution of it in an alcohol solvent (e.g., ethanol) may be used.

The amount of the alcohol for use per mole of the metal magnesium is preferably 2 to 100 mol, particularly preferably 5 to 50 mol. When the amount of the alcohol is too large, the yield of an alkoxylated magnesium compound (b) having excellent morphology may be decreased. When it is too small, stirring in a reaction vessel may not be smoothly carried out. However, the amount of the alcohol for use is not limited to the above molar ratio.

The halogen or the halogen-containing compound is used in such an amount that the amount of halogen or a halogen atom in the halogen-containing compound per mole of the metal magnesium is at least 0.0001 gram atom, preferably at least 0.0005 gram atom, more preferably at least 0.001 gram atom. When the above amount is less than 0.0001 gram atom, if the thus-obtained alkoxylated magnesium compound (b) is used as a carrier for the catalyst, the catalytic activity, the morphology of an olefin polymer, and the like become defective.

In the present invention, the halogen and the halogen-containing compound may be used singly or in combination of at least two members thereof. Further, the halogen and the halogen-containing compound may be used in combination. When the halogen and the halogen-containing compound are used in combination, the amount of all of halogen atoms of the halogen and the halogen-containing compound per mole of the metal magnesium is adjusted to at least 0.0001 gram atom, preferably, to at least 0.0005 gram atom, more preferably, to at least 0.001 gram atom.

Although not specially limited, the upper limit of the amount of the halogen and/or the halogen-containing compound can be determined in such a range that the alkoxylated magnesium compound (b) for use in the present invention can be obtained, and generally, it is preferably limited to less than 0.06 gram atom.

In the present invention, the particle diameter of the alkoxylated magnesium compound (b) can be controlled as required in the production thereof by properly selecting the amount of the halogen and/or the halogen-containing compound.

The production of the alkoxylated magnesium compound (b) is carried out until the generation of hydrogen gas is no longer found (generally, for 1 to 30 hours). Specifically, when iodine is used as a halogen, the the alkoxylated magnesium compound (b) can be produced by a method in which solid iodine is poured into a solution of metal magnesium in an alcohol and then the resultant mixture is allowed to react under heat, a method in which a solution of iodine in an alcohol is dropwise added to a solution of metal magnesium in an alcohol and then the mixture is allowed to react under heat, or a method in which a solution if iodine in an alcohol is dropwise added while a solution of metal magnesium in an alcohol is heated, to allow them to react.

Any one of these methods is preferably practiced in an inert gas atmosphere (e.g., nitrogen gas or argon gas) and optionally in the presence of an inert organic solvent (e.g., a saturated hydrocarbon such as n-hexane).

Further, when the metal magnesium, the alcohol and the halogen are poured, it is not required to pour the entire amount of each in the beginning, and each of them may be divided and poured. In a particularly preferred embodiment, the entire amount of the alcohol is poured in the beginning and the metal magnesium is divided and poured several times. In this case, the generation of a large amount of hydrogen gas at one time can be prevented, and such is much desirable in view of safety. Further, the reaction vessel can be downsized. Moreover, it is also possible to prevent the entrainment of alcohol and halogen caused by the generation of a large amount of hydrogen gas at one time. The number of the division can be determined by taking account of the size of a reaction vessel and is not specially limited, while it is divided and poured 5 to 10 times by taking account of complicatedness in operation.

Further, the reaction itself may be carried out by any one of a batch method and a continuous method. As a variant, further, there may be employed a method in which a small amount of metal magnesium is poured into the alcohol poured in the entire amount thereof in the beginning, a product formed by the reaction is separated and removed into another vessel, a small amount of metal magnesium is again poured and these procedures are repeated.

When the alkoxylated magnesium compound (b) is used for the preparation of the solid catalyst component [A], a dry alkoxylated magnesium compound (b) may be used, or there may be used an alkoxylated magnesium compound (b) that is washed with an inert solvent such as heptane, or the like after filtering. In each case, the alkoxylated magnesium compound (b) can be used in a subsequent step without being subjected to milling or a classification procedure for attaining a uniform particle diameter distribution. The alkoxylated magnesium compound (b) has a form close to a sphere and has a sharp particle diameter distribution. Further, the particles thereof have spherical form with small variations in sphericity.

Further, these alkoxylated magnesium compounds (b) may be used singly or in combination of at least two members thereof. Further, the alkoxylated magnesium compound (b) may be held on a support such as silica, alumina or polystyrene, and it may be used in the form of a mixture with a halogen, or the like.

As the above alkoxylated magnesium compound (b), a compound of the following general formula (V) is preferably used.

Mg(OR¹⁵)_{q}R¹⁶ _{2-q} (V)

In the above general formula (V), R¹⁵ is a hydrocarbon group, and R¹⁶ is a halogen atom. The above hydrocarbon group represented by R¹⁵ includes an alkyl group having 1 to 12 carbon atoms, a cycloalkyl group, an aryl group and an aralkyl group, and the halogen atom represented by R¹⁶ includes chlorine, bromine, iodine and fluorine. When a plurality of OR¹⁵ or R¹⁶ are present, they may be identical or different. q is an integer of 1 to 2.

Specific examples of the alkoxylated magnesium compound of the above general formula (V) include dialkoxymagnesium and diaryloxymagnesium such as dimethoxymagnesium, diethoxymagnesium, dipropoxymagnesium, dibutoxymagnesium, dihexyloxymagnesium, dioctoxymagnesium, diphenoxymagnesium and dicyclohexylmagnesium; and alkoxymagnesium halides and aryloxymagnesium halides such as butoxymagnesium chloride, cyclohexylmagnesium chloride, phenoxymagnesium chloride, ethoxymagnesium chloride, ethoxymagnesium bromide, butoxymagnesium bromide and ethoxymagnesium iodide. Of them, dialkoxymagnesium is preferred, and diethoxymagnesium is particularly preferred, in view of polymerization activity and stereoregularity.

### (c) Halogen-containing silicon compound

For the solid catalyst component for olefin polymerization in the present invention, a halogen-containing silicon compound (c) is used as required. As a halogen-containing silicon compound (c), a compound of the following general formula (VI) can be used.

Si (OR¹⁷)ᵣX² ₄₋ᵣ (VI)

When the halogen-containing silicon compound (c) is used, the catalytic activity during polymerization and stereoregularity may be improved and the amount of a fine powder to be contained in an olefin polymer may be decreased.

In the above general formula (VI), X² is a halogen atom, and of halogen atoms, a chlorine atom and a bromine atom are preferred, and a chlorine atom is particularly preferred. R¹⁷ is a hydrocarbon group. It may be any one of a saturated group and an unsaturated group, it may be a linear, branched or cyclic group, and further, it may contain hetero atom(s) such as sulfur, nitrogen, oxygen, silicon, phosphorus, etc. Of them, a hydrocarbon group having 1 to 10 carbon atoms is preferred, and an alkyl group, an alkenyl group, a cycloalkenyl group, an aryl group and an aralkyl group are particularly preferred. When a plurality of OR¹⁷S are present, they may be identical or different. Specific examples of R¹⁷ include methyl, ethyl, n-propyl, isopropyl, n-butyl, sec-butyl, isobutyl, n-pentyl, n-hexyl, n-heptyl, n-octyl, n-decyl, allyl, butenyl, cyclopentyl, cyclohexyl, cyclohexenyl, phenyl, tolyl, benzyl and phenethyl. r is an integer of 0 to 3.

Specific examples of the halogen-containing silicon compound of the above general formula (VI) include silicon tetrachloride, methoxytrichlorosilane, dimethoxydichlorosilane, trimethoxychlorosilane, ethoxytrichlorosilane, diethoxydichlorosilane, triethoxychlorosilane, propoxytrichlorosilane, dipropoxydichlorosilane and tripropoxychlorosilane. Of them, silicon tetrachloride is particularly preferred. These halogen-containing silicon compounds may be used singly or in combination of at least two members thereof.

### (d) Electron-donating compound

As an electron-donating compound, the present invention uses a diether compound of the following general formula (I) and/or a malonic diester of the following general formula (II), preferably, the following general formula (III). 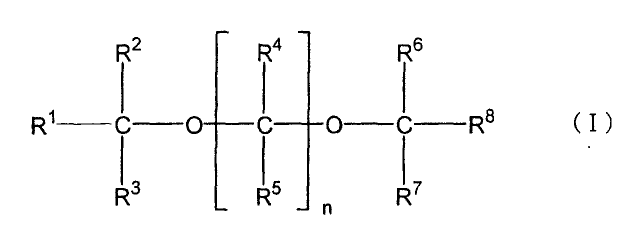 wherein n is an integer of 2 to 10, each of R¹ to R⁸ is independently a substituent having at least one element selected from carbon, hydrogen, oxygen, halogen, nitrogen, sulfur, phosphorus, boron or silicon, R¹ to R⁸ may together form a ring other than a benzene ring, and the main chain may contain an atom other than carbon. 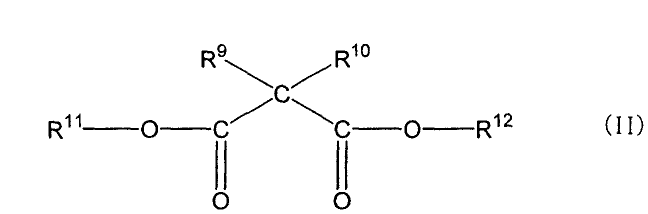 wherein each of R⁹ to R¹² is independently a linear, branched or cyclic alkyl group, or an arylalkyl group, having 1 to 20 carbon atoms, provided that the total sum of carbon atoms of R⁹ and R¹⁰ is 3 to 40. 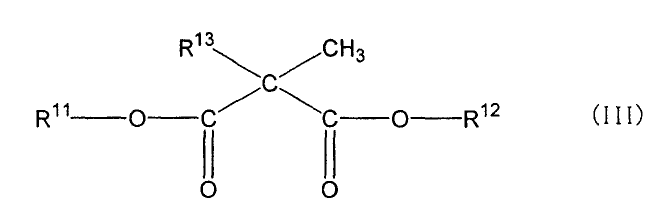 wherein R¹¹ and R¹² are as defined in the general formula (II), and R¹³ is a linear, branched or cyclic alkyl group having 2 to 20 carbon atoms.

In the above general formula (I), n is preferably 2 to 5. Further, each of R¹ to R⁸ is preferably a substituent having at least one element selected from carbon, hydrogen, silicon, halogen or oxygen.

Specifically, the diether compound of the above general formula (I) includes 2-(2-ethylhexyl)-1,3-dimethoxypropane, 2-isopropyl-1,3-dimethoxypropane, 2-butyl-1,3-dimethoxypropane, 2-s-butyl-1,3-dimethoxypropane, 2-cyclohexyl-1,3-dimethoxypropane, 2-phenyl-1,3-dimethoxypropane, 2-cumyl-1,3-dimethoxypropane, 2-(2-phenylethyl)-1,3-dimethoxypropane, 2-(2-cyclohexylethyl)-1,3-dimethoxypropane, 2-(p-chlorophenyl)-1,3-dimethoxypropane, 2-(diphenylmethyl)-1,3-dimethoxypropane, 2-(1-naphthyl)-1,3-dimethoxypropane, 2-(2-fluorophenyl)-1,3-dimethoxypropane, 2-(1-decahydronaphthyl)-1,3-dimethoxypropane, 2-(p-tert-butylphenyl)-1,3-dimethoxypropane, 2,2-dicyclohexyl-1,3-dimethoxypropane, 2,2-dicyclopentyl-1,3-dimethoxypropane, 2,2-diethyl-1,3-dimethoxypropane, 2,2-dipropyl-2,3-dimethoxypropane, 2,2-diisopropyl-1,3-dimethoxypropane, 2,2-dibutyl-1,3-dimethoxypropane, 2-methyl-2-propyl-1,3-dimethoxypropane, 2-methyl-2-benzyl-1,3-dimethoxypropane, 2-methyl-2-ethyl-1,3-dimethoxypropane, 2-methyl-2-isopropyl-1,3-dimethoxypropane, 2-methyl-2-phenyl-1,3-dimethoxypropane, 2-methyl-2-cyclohexyl-1,3-dimethoxypropane, 2,2-bis(p-chlorophenyl)-1,3-dimethoxypropane, 2,2-bis(2-cyclohexylethyl)-1,3-dimethoxypropane, 2-methyl-2-isobutyl-1,3-dimethoxypropane, 2-methyl-2-(2-ethylhexyl)-1,3-dimethoxypropane, 2,2-diisobutyl-1,3-dimethoxypropane, 2,2-diphenyl-1,3-dimethoxypropane, 2,2-dibenzyl-1,3-dimethoxypropane, 2,2-bis(cyclohexylmethyl)-1,3-dimethoxypropane, 2,2-diisobutyl-1,3-diethoxypropane, 2,2-diisobutyl-1,3-dibutoxypropane, 2-isobutyl-2-isopropyl-1,3-dimethoxypropane, 2-(1-methylbutyl)-2-isopropyl-1,3-dimethoxypropane, 2-(1-methylbutyl)-2-s-butyl-1,3-dimethoxypropane, 2,2-di-s-butyl-1,3-dimethoxypropane, 2,2-di-tert-butyl-1,3-dimethoxypropane, 2,2-dineopentyl-1,3-dimethoxypropane, 2-isopropyl-2-isopentyl-1,3-dimethoxypropane, 2-phenyl-2-isopropyl-1,3-dimethoxypropane, 2-phenyl-2-s-butyl-1,3-dimethoxypropane, 2-benzyl-2-isopropyl-1,3-dimethoxypropane, 2-benzyl-2-s-butyl-1,3-dimethoxypropane, 2-phenyl-2-benzyl-1,3-dimethoxypropane, 2-cyclopentyl-2-isopropyl-1,3-dimethoxypropane, 2-cyclopentyl-2-s-butyl-1,3-dimethoxypropane, 2-cyclohexyl-2-isopropyl-1,3-dimethoxypropane, 2-cyclohexyl-2-s-butyl-1,3-dimethoxypropane, 2-isopropyl-2-s-butyl-1,3-dimethoxypropane, 2-cyclohexyl-2-cyclohexylmethyl-1,3-dimethoxypropane, 2,3-diphenyl-1,4-diethoxybutane, 2,3-dicyclohexyl-1,4-diethoxybutane, 2,2-dibenzyl-1,4-diethoxybutane, 2,3-dicyclohexyl-1,4-diethoxybutane, 2,3-diisopropyl-1,4-diethoxybutane, 2,2-bis(p-methylpheny)-1,4-dimethoxybutane, 2,3-bis(p-chloropheny)-1,4-dimethoxybutane, 2,3-bis(p-fluoropheny)-1,4-dimethoxybutane, 2,4-diphenyl-1,5-dimethoxypentane, 2,5-diphenyl-1,5-dimethoxyhexane, 2,4-diisopropyl-1,5-dimethoxypentane, 2,4-diisobutyl-1,5-dimethoxypentane, 2,4-diisoamyl-1,5-dimethoxypentane, 3-methoxymethyltetrahydrofuran, 3-methoxymethyldioxane, 1,3-diisobutoxypropane, 1,2-diisobutoxypropane, 1,2-diisobutoxyethane, 1,3-diisoamyloxypropane, 1,3-diisoneopentyloxyethane, 1,3-dineopentyloxypropane, 2,2-tetramethylene-1,3-dimethoxypropane, 2,2-pentamethylene-1,3-dimethoxypropane, 2,2-hexamethylene-1,3-dimethoxypropane, 1,2-bis(methoxymethyl)cyclohexane, 2,8-dioxaspiro[5,5]undecane, 3,7-dioxabicyclo[3,3,1]nonane, 3,7-dioxabicyclo[3,3,0]octane, 3,3-diisobutyl-1,5-oxononane, 6,6-diisobutyloxyheptane, 1,1-dimethoxymethylcyclopentane, 1,1-bis(dimethoxymethyl)cyclohexane, 1,1-bis(methoxymethyl)bicyclo[2,2,1]heptane, 1,1-dimethoxymethylcyclopentane, 2-methyl-2-methoxymethyl-1,3-dimethoxypropane, 2-cyclohexyl-2-ethoxymethyl-1,3-diethoxypropane, 2-cyclohexyl-2-methoxymethyl-1,3-dimethoxypropane, 2,2-diisobutyl-1,3-dimethoxycyclohexane, 2-isopropyl-2-isoamyl-1,3-dimethoxycyclohexane, 2-cyclohexyl-2-methoxymethyl-1,3-dimethoxycyclohexane, 2-isopropyl-2-methoxymethyl-1,3-dimethoxycyclohexane, 2-isobutyl-2-methoxymethyl-1,3-dimethoxycyclohexane, 2-cyclohexyl-2-ethoxymethyl-1,3-diethoxycyclohexane, 2-cyclohexyl-2-ethoxymethyl-1,3-dimethoxycyclohexane, 2-isopropyl-2-ethoxymethyl-1,3-diethoxycyclohexane, 2-isopropyl-2-ethoxymethyl-1,3-dimethoxycyclohexane, 2-isobutyl-2-ethoxymethyl-1,3-diethoxycyclohexane, 2-isobutyl-2-ethoxymethyl-1,3-dimethoxycyclohexane, 9,9-bis(methoxymethyl)fluorene, tris(p-methoxyphenyl)phosphine, methylphenylbis(methoxymethyl)silane, diphenylbis(methoxymethyl)silane, methylcyclohexylbis(methoxymethyl)silane, di-tert-butylbis(methoxymethyl)silane, cyclohexyl-tert-butylbis(methoxymethyl)silane and i-propyl-tert-butylbis(methoxymethyl)silane.

Of them, 1,3-diether compounds are preferred, and particularly preferred are 2-isobutyl-2-isopropyl-1,3-dimethoxypropane, 9,9-bis(methoxymethyl)fluorene, 2,2-dicyclopentyl-1,3-dimethoxypropane, 2,2-diisobutyl-1,3-dimethoxypropane, 2-isopropyl-2-isopentyl-1,3-dimethoxypropane, 2,2-dicyclohexyl-1,3-dimethoxypropane, 2,2-bis(cyclohexylmethyl)-1,3-dimethoxypropane, 2-cyclohexyl-2-isopropyl-1,3-dimethoxypropane, 2-isopropyl-2-s-butyl-1,3-dimethoxypropane, 2,2-diphenyl-1,3-dimethoxypropane and 2-cyclopentyl-2-isopropyl-1,3-dimethoxypropane.

Further, these compounds may be used singly or in combination of at least two members thereof.

Examples of R⁹ to R¹² in the above general formulae (II) and (III) include methyl, ethyl, n-propyl, isopropyl, n-butyl, sec-butyl, isobutyl, tert-butyl, n-pentyl, n-hexyl, n-heptyl, n-octyl, n-decyl, cyclopentyl, cyclohexyl, benzyl and phenethyl. Of them, methyl, ethyl, n-propyl, isopropyl, n-butyl, sec-butyl, isobutyl and tert-butyl are preferred.

Further, R¹³ in the general formula (III) include ethyl, n-propyl, isopropyl, n-butyl, sec-butyl, isobutyl, tert-butyl, n-pentyl, n-hexyl, n-heptyl, n-octyl, n-decyl, cyclopentyl and cyclohexyl. Of them, ethyl, n-propyl, isopropyl, n-butyl, sec-butyl, isobutyl and tert-butyl are preferred.

Specific examples of the above malonic diester compound include dimethyl esters, diethyl esters, di-n-propyl esters, diisopropyl esters, di-n-butyl esters, diisobutyl esters, di-tert-butyl esters, di-n-pentyl esters, di-n-heptyl esters and di-n-octyl esters and dineopentyl esters of 2,2-diethyl malonic acid, 2-methyl-2-isopropyl malonic acid, 2-methyl-2-isobutyl malonic acid, 2-ethyl-2-sec-butyl malonic acid, 2-n-butyl-2-isobutyl malonic acid, 2-n-butyl-2-isopropyl malonic acid, 2-isobutyl-2-benzyl malonic acid, 2,2-dibenzyl malonic acid, and the like.

Of them, dimethyl ester, diethyl ester, di-n-propyl ester, diisopropyl ester, di-n-butyl ester, diisobutyl ester, di-tert-butyl ester, di-n-pentyl ester, di-n-heptyl ester, di-n-octyl ester and dineopentyl ester of 2-methyl-2-isopropyl malonic acid or 2-methyl-2-isobutyl malonic acid, which come under the above general formula (III), are preferred in view of polymerization activity and the stereoregularity of an olefin polymer. These compounds may be used singly or in combination of at least two members thereof.

### [B] Organic aluminum compound

Although not specially limited, the organic aluminum compound (B) for use in the present invention can be preferably selected from organic aluminum compounds having an alkyl group, a halogen atom, a hydrogen atom and an alkoxy group, aluminoxane or mixtures thereof. Specific examples thereof include trialkylaluminum such as trimethylaluminum, triethylaluminum, triisopropylaluminum, triisobutylaluminum and trioctylaluminum; dialkylalminum monochlorides such as diethylaluminum monochloride, diisopropylaluminum monochloride, diisobutylaluminum monochloride and dioctylaluminum monochloride; alkylaluminum sesquihalides such as ethylaluminum sesquichloride; and linear aluminoxanes such as methylalminoxane. Of these organic aluminum compounds, trialkylaluminum having lower alkyl groups having 1 to 5 carbon atoms is preferred, and trimethylaluminum, triethylaluminum, tripropylaluminum and triisobutylaluminum are particularly preferred. These organic aluminum compounds may be used singly or in combination of at least two members thereof.

### [C] Electron-donating compound

For the catalyst for olefin polymerization in the present invention, an electron-donating compound [C] is used as required. The electron-donating compound [C] can be selected from an organosilicon compound having an alkoxy group, a nitrogen-containing compound, a phosphorus-containing compound or an oxygen-containing compound. Of them, an organosilicon compound having an alkoxy group is particularly preferred.

Specific examples of the organosilicon compound having an alkoxy group include trimethylmethoxysilane, timethylethoxysilane, triethylmethoxysilane, triethylethoxysilane, dimethyldimethoxysilane, dimethyldiethoxysilane, ethylisopropyldimethoxysilane, propylisopropyldimethoxysilane, diisopropyldimethoxysilane, diisobutyldimethoxysilane, isopropylisobutyldimethoxysilane, di-t-butyldimehoxysilane, t-butylmethyldimethoxysilane, t-butylethyldimethoxysilane, t-butylpropyldimethoxysilane, t-butylisopropyldimethoxysilane, t-butylbutyldimethoxysilane, t-butylisobutyldimethoxysilane, t-butyl(s-butyl)dimethoxysilane, t-butylamyldimethoxysilane, t-butylhexyldimethoxysilane, t-butylheptyldimethoxysilane, t-butyloctyldimethoxysilane, t-butylnonyldimethoxysilane, t-butyldecyldimethoxysilane, t-butyl(3,3,3-trifluromethylpropyl)dimethoxysilane, cyclohexylmethyldimethoxysilane, cyclohexylethyldimethoxysilane, cyclohexylpropyldimethoxysilane, cyclohexylisobutyldimethoxysilane, dicyclohexyldimethoxysilane, cyclohexyl-t-butyldimethoxysilane, cyclopentylmethyldimethoxysilane, cyclopentylethyldimethoxysilane, cyclopentylpropyldimethoxysilane, cyclopentyl-t-butyldimethoxysilane, dicyclopentyldimethoxysilane, cyclopentylcyclohexyldimethoxysilane, bis(2-methylcyclopentyl)dimethoxysilane, bis(2,3-dimethylcyclopentyl)dimethoxysilane, α-naphthyl-1,1,2-trimethylpropyldimethoxysilane, n-tetradecanyl-1,1,2-trimethylpropyldimethoxysilane, 1,1,2-trimethylpropylmethyldimethoxysilane, 1,1,2-trimethylpropylethyldimethoxysilane, 1,1,2-trimethylpropylisopropyldimethoxysilane, 1,1,2-trimethylpropylcyclopentyldimethoxysilane, 1,1,2-trimethylpropylcyclohexyldimethoxysilane, 1,1,2-trimethylpropylmyristyldimethoxysilane, diphenyldimethoxysilane, diphenyldiethoxysilane, phenyltriethoxysilane, methyltrimethoxysilane, methyltriethoxysilane, ethyltrimethoxysilane, ethyltriethoxysilane, propyltrimethoxysilane, isopropyltrimethoxysilane, butyltrimethoxysilane, butyltriethoxysilane, isobutyltrimethoxysilane, t-butyltrimethoxysilane, s-butyltrimethoxysilane, amyltrimethoxysilane, isoamyltrimethoxysilane, cyclopentyltrimethoxysilane, cyclohexyltrimethoxysilane, norbornanetrimethoxysilane, indenyltrimethoxysilane, 2-methylcyclopentyltrimethoxysilane, ethyltriisopropoxysilane, methylcyclopentyl(t-butoxy)dimethoxysilane, isopropyl(t-butoxy)dimethoxysilane, t-butyl(t-butoxy)dimethoxysilane, (isobutoxy)dimethoxysilane, t-butyl(t-butoxy)dimethoxysilane, vinyltriethoxysilane, vinyltributoxysilane, chlorotriethoxysilane, γ-chloropropyltrimethoxysilane, γ-aminopropyltriethoxysilane, 1,1,2-trimethylpropyltrimethoxysilane, 1,1,2-trimethylpropylisopropoxydimethoxysilane, 1,1,2-trimethylpropyl(t-butoxy)dimethoxysilane, tetramethoxysilane, tetraethoxysilane, tetrabutoxysilane, tetraisobutoxysilane, ethyl silicate, butyl silicate, trimethylphenoxysilane, methyltriallyloxysilane, vinyltris(β-methoxyethoxy)silane, vinyltrisacetoxysilane and dimethyltetraethoxydisiloxane. These organosilicon compounds may be used singly or in combination of at least two members thereof.

Further, the above organosilicon compound also includes a compound obtained by reacting a silicon compound having no Si-O-C bond with an organic compound having an 0-C bond in advance or by reacting these compounds during the polymerization of an α-olefin. Specifically, a compound obtained by reacting silicon tetrachloride and an alcohol is included.

Specific examples of the nitrogen-containing compound include 2,6-substituted piperidines such as 2,6-diisopropylpiperidine, 2,6-diisopropyl-4-methylpiperidine and N-methyl-2,2,6,6-tetramethylpiperidine; 2,5-substituted azolidines such as 2,5-diisopropylazolidine and N-methyl-2,2,5,5-tetramethylazolidine; substituted methylenediamines such as N,N,N',N'-tetramethylmethylenediamine and N,N,N',N'-tetraethylmethylenediamine; and substituted imidazolidines such as 1,3-dibenzylimidazolidine and 1,3-dibenzyl-2-phenylimidazolidine.

Specific examples of the phosphorus-containing compound include phosphorous acid esters such as triethyl phosphite, tri-n-propyl phosphite, triisopropyl phosphite, tri-n-butyl phosphite, triisobutyl phosphite, diethyl-n-butyl phosphite and diethylphenyl phosphite.

Specific examples of the oxygen-containing compound include 2,5-substituted tetrahydrofurans such as 2,2,5,5-tetramethyltetrahydrofuran and 2,2,5,5-tetraethyltetrahydrofuran; and dimethoxymethane derivatives such as 1,1-dimethoxy-2,3,4,5-tetrachlorocyclopentadiene, 9,9-dimethoxyfluorene and diphenyldimethoxymethane.

As an oxygen-containing compound, the above diether compound of the electron-donating compound (d) can be also used. Of them, 2-isobutyl-2-isopropyl-1,3-dimethoxypropane, 2-isopropyl-2-isopentyl-1,3-dimethoxypropane, 9,9-bis(methoxymethyl)fluorene, 2,2-dicyclopentyl-1,3-dimethoxypropane and 2,2-dicyclopentyl-1,3-dimethoxypropane are particularly preferred.

### 2. Method for preparing [A] solid catalyst component

As a preparation method of the solid catalyst component [A], for example, there is employed a method in which the above halogen-containing titanium compound (a), the alkoxylated magnesium compound (b), the electron-donating compound (d) and, if necessary, the halogen-containing silicon compound (c) are allowed to contact-react and then, preferably, halogen-containing titanium compound (a) is allowed to contact-react again (once or more). The order of other contacts is not critical.

These components may be contacted in the presence of an inert solvent such as a hydrocarbon, or each component may be diluted in an inert solvent such as a hydrocarbon and may be brought into contact with others. Examples of the above inert solvent include aliphatic or alicyclic hydrocarbons such as octane, decane, ethylcyclohexane, etc., aromatic hydrocarbons such as toluene, ethylbenzene, xylene, etc., halogenated hydrocarbons such as chlorobenzene, tetrachloroethane, chlorofluorocarbons, and mixtures thereof. Of them, aliphatic hydrocarbons and aromatic hydrocarbons are preferred, and aliphatic hydrocarbons are particularly preferably used.

The above halogen-containing titanium compound (a) is used generally in an amount, per mole of magnesium of the alkoxylated magnesium compound (b), of 0.5 to 100 mol, preferably 1 to 50 mol. When this molar ratio is outside the above range, the catalytic activity may be insufficient.

Further, the electron-donating compound (d) is used generally in an amount, per mole of magnesium of the alkoxylated magnesium compound (b), of 0.01 to 10 mol, preferably 0.05 to 1.0 mol. When the above amount is less than 0.01 mol, the stereoregularity of a polymer may be degraded. When it exceeds 10 mol, the polymerization activity per titanium may be degraded.

When the halogen-containing silicon compound (c) is used, the amount thereof per mole of magnesium of the alkoxylated magnesium compound (b) is generally 0.005 to 100 mol. When the above amount is less than 0.005 mol, the polymerization activity per titanium or the stereoregularity of a polymer may be degraded. When it exceeds 100 mol, the polymerization activity per the solid catalyst component may be degraded.

The above contact-reaction of the compounds (a), (b) and (d) or the compounds (a), (b), (c) and (d) is carried out generally in a temperature range of 90 to 150°C, preferably 125 to 140°C after they are all added together. When the above contact temperature is outside the above range, the effect of improving the catalytic activity and the stereoregularity may not be fully exhibited. The contacting is carried out generally for 1 minute to 24 hours, preferably 10 minutes to 6 hours. While the pressure in the above case differs depending upon the kind of a solvent if it is used, the contact temperature, and the like, it is generally in the range of 0 to 5 MPa, preferably 0 to 1 MPa. During contacting procedures, it is preferred to stir the compounds in view of contact uniformity and contact efficiency. These contact conditions are also applicable to the contact-reaction which is carried out second time and thereafter with regard to the halogen-containing titanium compound (a).

The order of contacting the compounds (a) to (d) is not specially limited. However, when the compounds (a), (b) and (d) are contacted, preferably the compound (a) and the compound (b) are contacted first, and then the compound (d) is contacted. In this case, the polymerization activity may be enhanced. Further, when the compounds (a), (b), (c) and (d) are contacted, preferably the compound (b) and the compound (c) are contacted, then the compound (d) is contacted and the compound (a) is finally contacted. In this case, the polymerization activity may be enhanced. In addition, the contacting order of the compound (d) and the compound (a) may be reversed.

When a solvent is used in the procedure of contacting the halogen-containing titanium compound (a), the amount of the solvent per mole of the halogen-containing titanium compound (a) is generally 5,000 ml or less, preferably 10 to 1,000 ml. When this ratio is outside the above range, the contact uniformity and the contact efficiency may be degraded.

Further, after the contact-reaction that is carried out first time with regard to the compounds (a), (b) and (d) or the compounds (a), (b), (c) and (d), a reaction product is generally washed with an inert solvent at a temperature of 90 to 150°C, preferably 120 to 140°C. When the washing temperature is outside the above range, the effect of improving the catalytic activity and the stereoregularity may not be fully exhibited. Examples of the above inert solvent include aliphatic hydrocarbons such as octane, decane, etc., alicyclic hydrocarbons such as methylcyclohexane, ethylcyclohexane, etc., aromatic hydrocarbons such as toluene, xylene, ethyl benzene, etc., halogenated hydrocarbons such as chlorobenzene, tetrachloroethane, chlorofluorocarbons, etc., and mixtures thereof. Of them, aliphatic hydrocarbons and aromatic hydrocarbons are preferred.

While the washing temperature after the contact-reaction that is carried out second time and thereafter with regard to the halogen-containing titanium compound (a) is not specially limited, it is sometimes preferred to carry out the washing at a temperature of 90 to 150°C, particularly preferably 120 to 140°C, in view of stereoregularity.

The washing method is preferably a method of decantation or filtering. The amount of the inert solvent, the time period for the washing and the number of times of the washing are not specially limited. However, the washing is effected using the solvent in an amount, per mole of the magnesium compound, generally, of 100 to 100,000 ml, preferably 1,000 to 50,000 ml, generally for 1 minute to 24 hours, preferably 10 minutes to 6 hours. When the ratios are outside the above range, the washing is sometimes incomplete.

In this case, the pressure differs depending upon the kind of the solvent, the washing temperature, etc., while the washing is generally carried out under a pressure in the range of 0 to 5 MPa, preferably 0 to 1 MPa. During the washing procedure, it is preferred to carry out the stirring with respect to the uniformity of washing and washing efficiency. The thus-obtained solid catalyst component [A] can be stored in a dry state or in an inert solvent such as a hydrocarbon, or the like.

### 3. Method for producing olefin polymer

While the amount of each component for the catalyst for olefin polymerization, provided by the present invention, is not specially limited, the solid catalyst component [A] is generally used in an amount corresponding to the range of 0.00005 to 1 mmol as a titanium atom per liter of a reaction volume.

The organic aluminum compound [B] is generally used in such an amount that the aluminum/titanium atomic ratio is generally in the range of 1 to 1,000, preferably 10 to 1,000. When the atomic ratio is outside the above range, the catalytic activity may be insufficient.

Further, when the electron-donating compound [C] is used, it is used in such an amount that [C]/[B] (molar ratio) is generally in the range of 0.001 to 5.0, preferably 0.01 to 2.0, more preferably 0.05 to 1.0. When the molar ratio is outside the above range, the catalytic activity and the stereoregularity may not be sufficiently obtained. When preliminary polymerization is carried out, however, the amount of the electron-donating compound [C] can be further decreased.

As an olefin for use in the present invention, an α-olefin of the general formula (VII) is preferred.

R¹⁸-CH=CH₂ (VII)

In the above general formula (VII), R¹⁸ is a hydrogen atom or a hydrocarbon group, the hydrocarbon group may be a saturated group or an unsaturated group, and it may be a linear, branched or cyclic group. Specifically, the olefin includes ethylene, propylene, 1-butene, 1-pentene, 1-hexene, 1-heptene, 1-octene, 1-decene, 3-methyl-1-pentene, 4-methyl-1-pentene, vinylcyclohexane, butadiene, isoprene, piperylene, and the like. These olefins may be used singly or in combination of at least two members thereof. Of the above olefins, ethylene and propylene are preferred.

In the polymerization of an olefin in the present invention, the regular polymerization may be carried out after preliminary polymerization is first carried out as required in view of the catalytic activity during the polymerization and the stereoregularity and powder form of an olefin polymer. In this case, an olefin is preliminarily polymerized in the presence of a catalyst that is a mixture of predetermined amounts of the solid catalyst component [A], the organic aluminum compound [B] and optionally the electron-donating compound [C], generally at a temperature in the range of 1 to 100°C under a pressure of atmospheric pressure to approximately 5 MPa, and the olefin is polymerized in a regular manner in the presence of the catalyst and the preliminary polymerization product.

The polymerization method in the above regular polymerization is not specially limited, and any one of solution polymerization, slurry polymerization, gaseous phase polymerization, bulk polymerization, and the like can be applied. Further, batch polymerization and continuous polymerization can be applied as well as two-stage polymerization or multi-stage polymerization under different conditions.

Concerning reaction conditions, the polymerization pressure is not specially limited, and in view of polymerization activity, it is determined to be in the range generally of atmospheric pressure to 8 MPa, preferably 0.2 to 5 MPa, and the polymerization temperature is determined to be in the range generally of 0 to 200°C, preferably 30 to 100°C. Although differing depending upon the kind of an olefin as a raw material and the polymerization temperature, the polymerization time period is generally 5 minutes to 20 hours, preferably approximately 10 minutes to 10 hours.

The molecular weight of the olefin polymer can be adjusted by adding a chain transfer agent, preferably, by adding hydrogen. Further, an inert gas such as nitrogen, or the like, can be allowed to be present. Concerning the catalyst components in the present invention, the solid catalyst component [A], the organic aluminum compound [B] and the electron-donating compound [C] may be mixed to cause them to contact each other and immediately thereafter an olefin may be introduced and polymerized. Otherwise, the catalyst components may be aged for approximately 0.2 to 3 hours after the contacting and then an olefin may be introduced and polymerized. Further, the above catalyst components may be fed in the form of a suspension of them in an inert solvent or an olefin. In the present invention, post treatment after the polymerization can be carried out according to a conventional method. That is, in a gaseous phase polymerization method, after polymerization, a nitrogen current or the like can be allowed to pass through a polymer powder withdrawn from a polymerizer for removing an olefin, etc., contained therein. Further, a polymer may be pelletized with an extruder as required, and in this case, a small amount of water, an alcohol, or the like can be added for completely deactivating the catalyst. In a bulk polymerization method, after polymerization, a polymer can be pelletized after a monomer is completely separated from the polymer withdrawn from a polymerizer.

### Examples

The present invention will be explained with reference to Examples hereinafter, while the present invention shall not be limited to the Examples. A Ti support amount of a solid catalyst component, an intrinsic viscosity [η] and stereoregularity [mmmm] of polymer, and an average particle diameter (D₅₀), fine powder amount, coarse powder amount and apparent density (AD) of polymer powder were determined as follows.
(1) Intrinsic viscosity [η]: A polymer was dissolved in decalin and measured at 135°C.
(2) Stereoregularity of polymer [mmmm]: A polymer was dissolved in a solution of a 1,2,4-trichlorobenzene/heavy-benzene mixture having a ratio of 90:10 (volume ratio), and the stereoregularity of the polymer was quantitatively determined on the basis of signals of methyl groups measured with a ¹³C-NMR (trade name: LA-500, manufactured by JEOL Ltd.) at 130°C by a proton complete decoupling method.
   An isotactic pentad fraction [mmmm] refers to an isotactic fraction in pentad units of a polypropylene molecule chain determined on the basis of ¹³C-NMR spectrum as proposed by A. Zambelli, et al., in Macromolecules, Vol. 6, page 925 (1973).
   Further, a method of determining assignment of peaks of ¹³C-NMR spectrum was according to the assignment proposed by A. Zambelli, et al., in Macromolecules, Vol. 8, page 687 (1975).
(3) Average particle diameter (D₅₀), fine powder amount and coarse powder amount of polymer powder: A particle diameter distribution measured with sieves was plotted on a logarithmico-normal probability paper, and a 50 % particle diameter was used as an average particle diameter. Further, a weight percentage of powder passing through openings having a size of 250 µm or less was defined as a fine powder amount, a weight percentage of powder passing through openings having a size of 2,500 µm or greater was defined as a coarse powder amount, and these amounts were determined.
(4) Apparent density (AD) of polymer powder: Measured according to JIS K 6721.

### Example 1

### (1) Preparation of alkoxylated magnesium compound

A three-necked flask with a stirrer, which had an internal volume of 0.5 liter and had been subjected to replacement of an atmosphere therein with nitrogen, was charged with 122 g (2.64 gram atoms) of dehydrated ethanol, 0.9 g (7.1 milligram atoms) of iodine and 8 g (0.33 gram atom) of metal magnesium, and these components were reacted at 780°C with stirring (350 rpm) until no hydrogen was generated from the system, to give an alkoxylated magnesium compound (diethoxymagnesium).

### (2) Preparation of solid catalyst component

A three-necked flask with a stirrer, having an internal volume of 0.5 liter, was subjected to replacement of an atmosphere therein with nitrogen gas and then charged with 80 ml of dehydrated octane and 16 g (0.140 mol) of the diethoxymagnesium prepared in the above (1) as a carrier. These components were heated to 40°C, 2.4 ml of silicon tetrachloride was added, and the mixture was stirred for 20 minutes. Then, 2.9 ml of 2-isobutyl-2-isopropyl-1,3-dimethoxypropane (IPIBMP) was added as an internal donor (electron-donating compound). This solution was temperature-increased up to 65°C, then, 77 ml of titanium tetrachloride was dropwise added, and the mixture was stirred at an internal temperature of 125°C for 2 hours to carry out contacting procedures. Then, the reaction mixture was fully washed with dehydrated octane. Then, 122 ml of titanium tetrachloride was added, and contacting procedures were carried out at an internal temperature of 125°C for 2 hours, followed by sufficient washing with dehydrated octane, to give a solid catalyst component.

### (3) Polymerization of propylene

An autoclave made of stainless steel with a stirrer, having an internal volume of 1 liter, was fully dried and subjected to replacement of an atmosphere therein with nitrogen, and then 400 ml of dehydrated heptane was added at room temperature. The autoclave was charged with 2.0 mmol of triethylaluminum and 0.0025 mmol, as a Ti atom, of the solid catalyst component prepared in the above (2) and charged with hydrogen up to 0.02 MPa. Then, while propylene was introduced, the autoclave was temperature-increased to 80°C and pressure-increased to a total pressure of 0.8 MPa, followed by polymerization for 1 hour.

Then, the temperature was decreased, the pressure was removed, and the content was taken out and poured into 2 liters of methanol to deactivate the catalyst. The catalyst was filtered off, and the remainder was vacuum-dried to give a polypropylene. Table 1 shows the results.

### Example 2

A solid catalyst component was prepared and propylene was polymerized in the same manner as in (2) and (3) of Example 1, except that the 2-isobutyl-2-isopropyl-1,3-dimethoxypropane (2.9 ml) was replaced with 9,9-bis(methoxymethyl)fluorene (FLUMP) (3.5 ml) in (2) of Example 1. Table 1 shows the results.

### Example 3

A solid catalyst component was prepared and propylene was polymerized in the same manner as in (2) and (3) of Example 1, except that diethoxymagnesium prepared by changing the amount of iodine to 0.27 g and changing the reaction temperature to 40°C was used in (2) of Example 1. Table 1 shows the results.

### Example 4

A solid catalyst component was prepared, and propylene was polymerized, in the same manner as in Example 3 except that 2-isobutyl-2-isopropyl-1,3-dimethoxypropane (2.9 ml) was replaced with 9,9-bis(methoxymethyl)fluorene (3.5 ml) in Example 3. Table 1 shows the results.

### Comparative Example 1

A three-necked flask with a stirrer, which had an internal volume of 0.5 liter and had been subjected to replacement of an atmosphere therein with nitrogen, was charged with 13.3 g of magnesium chloride (anhydride), 70 ml of decane and 65.5 ml (0.42 mol) of 2-ethylhexyl alcohol, and these components were allowed to react under heat at 130°C for 2 hours, to form a homogeneous solution. Then, 3.12 g of anhydrous phthalic acid was added to this solution, and the mixture was stirred at 130°C further for 1 hour to dissolve the anhydrous phthalic acid in the above homogeneous solution.

The thus-obtained homogeneous solution was cooled to room temperature, and then the total amount thereof was dropwise added to 373 ml of titanium tetrachloride maintained at -20°C, over a time period of 1 hour. After the addition, the resultant homogeneous solution was temperature-increased to 110°C over 4 hours, and when the temperature reached to 110°C, 3.7 ml of 2-isobutyl-2-isopropyl-1,3-dimethoxypropane was added. Then, while the temperature was maintained at 110°C, the mixture was stirred for 2 hours. After the reaction was completed in 2 hours, a solid portion was collected by hot filtering, and the solid portion was again suspended in 275 ml of titanium tetrachloride, followed by a reaction again under heat at 110°C for 2 hours. After completion of the reaction, a solid portion was collected again by hot filtering and washed with decane and hexane at 110°C. The washing was carried out until no titanium compound was detected in the wash liquid, to give a solid catalyst component.

Propylene was polymerized in the presence of the above catalyst component in the same manner as in (3) of Example 1. Table 1 shows the results.

### Comparative Example 2

A solid catalyst component was prepared in the same manner as in Comparative Example 1 except that 2-isobutyl-2-isopropyl-1,3-dimethoxypropane (3.7 ml) was replaced with 9,9-bis(methoxymethyl)fluorene (4.4 ml), and propylene was polymerized. Table 1 shows the results.

### Comparative Example 3

### (1) Preparation of alkoxylated magnesium compound

A solid product, which was obtained by repeating the same procedures as those in (1) of Example 1 except that no iodine was used, was milled with a ball mill to prepare diethoxymagnesium.

### (2) Preparation of solid catalyst component

A three-necked flask with a stirrer was subjected to replacement of an atmosphere therein with nitrogen gas and then charged with 3 g of the diethoxymagnesium prepared in the above (1), and 5.6 ml of 2-isobutyl-2-isopropyl-1,3-dimethoxypropane and 37.5 ml of silicon tetrachloride were added. The mixture was heated to 40°C and maintained for 1 hour. The mixture was filtered, then, 120 ml of titanium tetrachloride was added, and the mixture was heated to 100°C and maintained for 2 hours. The reaction mixture was filtered at 100°C, followed by washing with hot decane twice, and then 120 ml of titanium tetrachloride was added. The mixture was heated to 110°C and maintained for 2 hours. Then, the mixture was filtered at 110°C, followed by washing with hot decane twice and further by washing with n-hexane five times, to give a solid catalyst component.

### (3) Polymerization of propylene

Propylene was polymerized in the same manner as in (3) of Example 1 except that the solid catalyst component prepared in the above (2) was used in (3) of Example 1. Table 1 shows the results.

### Comparative Example 4

A solid catalyst component was prepared and propylene was polymerized in the same manner as in (2) and (3) of Comparative Example 3 except that 2-isobutyl-2-isopropyl-1,3-dimethoxypropane (5.6 ml) was replaced with 2-isopentyl-2-isopropyl-1,3-dimethoxypropane (IPMP) (6.0 ml) in (2) of Comparative Example 3. Table 1 shows the results.

### Comparative Example 5

A solid catalyst component was prepared and propylene was polymerized in the same manner as in (2) and (3) of Comparative Example 3 except that 2-isobutyl-2-isopropyl-1,3-dimethoxypropane (5.6 ml) was replaced with 9-bis(methoxymethyl)fluorene (6.7 ml) in (2) of Comparative Example 3. Table 1 shows the results.

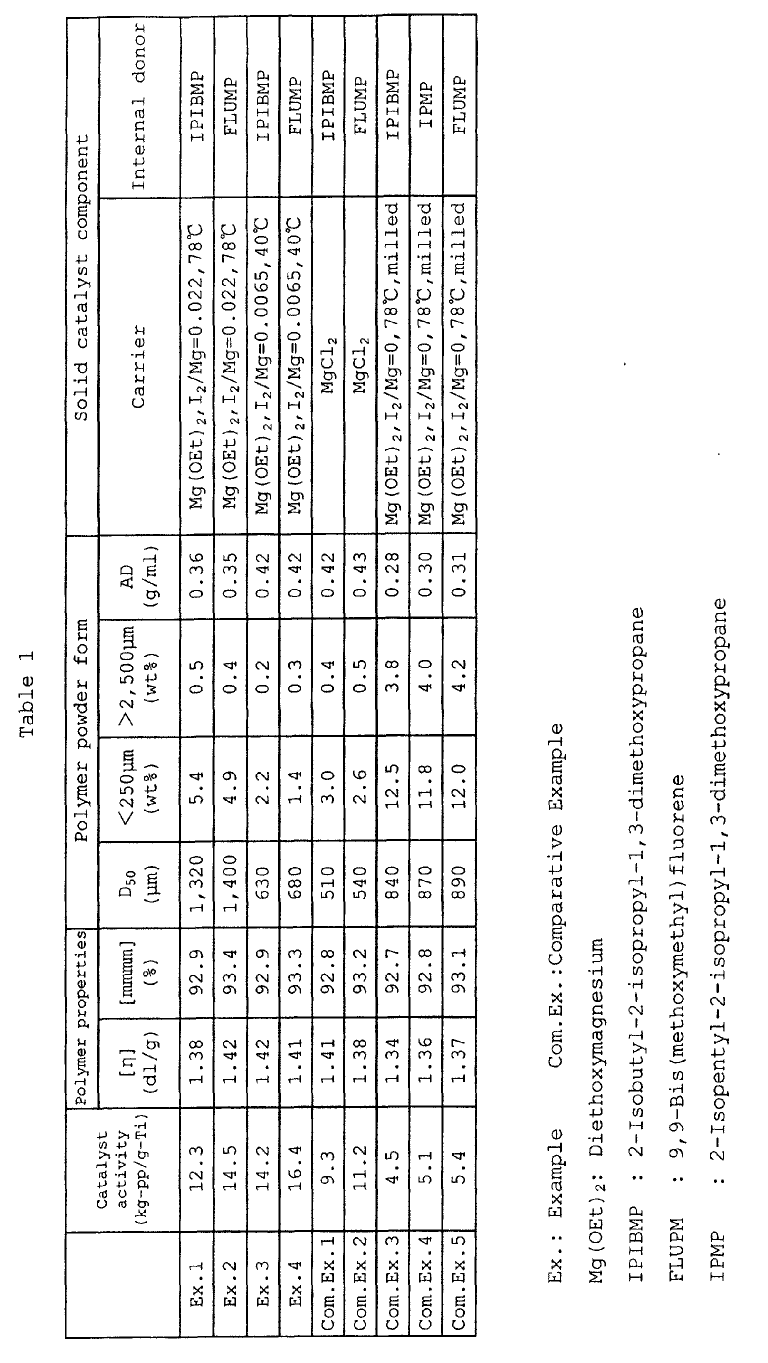

### Example 5

### (1) Preparation of alkoxylated magnesium compound

A three-necked flask with a stirrer, which had an internal volume of 0.5 liter and had been subjected to replacement of an atmosphere therein with nitrogen, was charged with 122 g (2.64 gram atoms) of dehydrated ethanol, 0.9 g (7.1 milligram atoms) of iodine and 8 g (0.33 gram atoms) of metal magnesium. These components were allowed to react at 78°C with stirring (350 rpm) until no hydrogen was generated from the system, to give an alkoxylated magnesium compound (diethoxymagnesium).

### (2) Preparation of solid catalyst component

A three-necked flask with a stirrer, having an internal volume of 0.5 liter, was subjected to replacement of an atmosphere therein with nitrogen gas, and then 80 ml of dehydrated octane and 16 g of the diethoxymagnesium prepared in the above (1) as a carrier were added. The mixture was heated to 40°C, 2.4 ml of silicon tetrachloride was added, and the mixture was stirred for 20 minutes. Then, 3.1 ml of diethyl 2-methyl-2-isopropyl malonate (DEMIPM) was added as an internal donor (electron-donating compound). This solution was temperature-increased up to 65°C, thereafter, 77 ml of titanium tetrachloride was added, and the mixture was stirred at an internal temperature of 125°C for 2 hours to carry out contacting procedures. Then, the reaction mixture was fully washed with dehydrated octane. Then, 122 ml of titanium tetrachloride was added, the mixture was stirred at an internal temperature of 125°C for 2 hours to carry out contacting procedure, and then the reaction mixture was fully washed with dehydrated octane, to give a solid catalyst component.

### (3) Polymerization of propylene

An autoclave with a stirrer, which had an internal volume of 1 liter and was made of stainless steel, was fully dried and subjected to replacement of an atmosphere therein with nitrogen and then charged with 400 ml of dehydrated heptane at room temperature. The autoclave was charged with 2.0 mmol of triethylaluminum, 0.25 mmol of cyclohexylmethyldimethoxysilane (CHMDMS) as an external donor (electron-donating compound) and 0.0025 mmol, as a Ti atom, of the solid catalyst component prepared in the above (2) and charged with hydrogen up to 0.1 MPa. Then, while propylene was introduced, the autoclave was temperature-increased to 80°C and pressure-increased to a total pressure of 0.8 MPa, followed by polymerization for 1 hour.

Then, the temperature was decreased, the pressure was removed, and the content was taken out and poured into 2 liters of methanol to deactivate the catalyst. The content was filtered off, and the remainder was vacuum-dried to give a polypropylene. Table 2 shows the results.

### Example 6

A solid catalyst component was prepared and propylene was polymerized in the same manner as in (2) and (3) of Example 5 except that 3.1 ml of diethyl 2-methyl-2-isopropyl malonate was replaced with 3.9 ml of di-n-butyl 2-methyl-2-isopropyl malonate (DBMIPM) in (2) of Example 5. Table 2 shows the results.

### Example 7

A solid catalyst component was prepared and propylene was polymerized in the same manner as in (2) and (3) of Example 5 except that 3.1 ml of diethyl 2-methyl-2-isopropyl malonate was replaced with 3.1 ml of diethyl 2,2-diethyl malonate in (2) of Example 5. Table 2 shows the results.

### Example 8

A solid catalyst component was prepared and propylene was polymerized in the same manner as in (2) and (3) of Example 5 except that diethoxymagnesium prepared by changing the amount of iodine to 0.27 g (2.1 milligram atoms) and changing the reaction temperature to 40°C was used in (2) of Example 5. Table 2 shows the results.

### Example 9

A solid catalyst component was prepared and propylene was polymerized in the same manner as in Example 8 except that 3.1 ml of diethyl 2-methyl-2-isopropyl malonate was replaced with 3.9 ml of di-n-butyl 2-methyl-2-isopropyl malonate in Example 8. Table 2 shows the results.

### Example 10

A solid catalyst component was prepared and propylene was polymerized in the same manner as in Example 8 except that 3.1 ml of diethyl 2-methyl-2-isopropyl malonate was replaced with 3.1 ml of diethyl 2,2-diethyl malonate in Example 8. Table 2 shows the results.

### Comparative Example 6

A three-necked flask with a stirrer, which had an internal volume of 0.5 liter and had been subjected to replacement of an atmosphere therein with nitrogen, was charged with 13.3 g of magnesium chloride (anhydride), 70 ml of decalin and 65.5 ml (0.42 mol) of 2-ethylhexyl alcohol, and these components were allowed to react under heat at 130°C for 2 hours, to form a homogeneous solution. Then, 3.12 g of anhydrous phthalic acid was added to this solution, and the mixture was stirred at 130°C further for 1 hour to dissolve the anhydrous phthalic acid in the above homogeneous solution. The thus-obtained homogeneous solution was cooled to room temperature, and then the total amount thereof was dropwise added to 373 ml of titanium tetrachloride maintained at -20°C, over a time period of 1 hour. After the addition, the resultant homogeneous solution was temperature-increased to 110°C over 4 hours, and when the temperature reached to 110°C, 4.0 ml of diethyl 2-methyl-2-isopropyl malonate was added. Then, while the temperature was maintained at 110°C, the mixture was stirred for 2 hours. After the reaction was completed in 2 hours, a solid portion was collected by hot filtering, and the solid portion was again suspended in 275 ml of titanium tetrachloride, followed by a reaction again under heat at 110°C for 2 hours. After completion of the reaction, a solid portion was collected again by hot filtering and washed with decane and hexane at 110°C. The washing was carried out until no titanium compound was detected in the wash liquid, to give a solid catalyst component.

Propylene was polymerized in the presence of the above catalyst component in the same manner as in (3) of Example 5. Table 2 shows the results.

### Comparative Example 7

A solid catalyst component was prepared and propylene was polymerized in the same manner as in Comparative Example 6 except that 4.0 ml of diethyl 2-methyl-2-isopropyl malonate was replaced with 4.0 ml of diethyl 2,2-diethyl malonate in Comparative Example 6. Table 2 shows the results.

### Comparative Example 8

### (1) Preparation of alkoxylated magnesium compound

A solid product, which was obtained by repeating the same procedures as those in (1) of Example 5 except that no iodine was used in (1) of Example 5, was milled with a ball mill to prepare diethoxymagnesium.

### (2) Preparation of solid catalyst component

A three-necked flask with a stirrer was subjected to replacement of an atmosphere therein with nitrogen gas and then charged with 3 g of the diethoxymagnesium prepared in the above (1), and 6.0 ml of diethyl 2-methyl-2-isopropyl malonate and 37.5 ml of silicon tetrachloride were added. The mixture was heated to 40°C and maintained for 1 hour. The mixture was filtered, then, 120 ml of titanium tetrachloride was added, and the mixture was heated to 100°C and maintained for 2 hours. The reaction mixture was filtered at 100°C, followed by washing with hot decane twice, and then 120 ml of titanium tetrachloride was added. The mixture was heated to 110°C and maintained for 2 hours. Then, the mixture was filtered at 110°C, followed by washing with hot decane twice and further by washing with n-hexane five times, to give a solid catalyst component.

### (3) Polymerization of propylene

Propylene was polymerized in the same manner as in (3) of Example 5 except that the solid catalyst component prepared in the above (2) was used in (3) of Example 5. Table 2 shows the results.

### Comparative Example 9

A solid catalyst component was prepared and propylene was polymerized in the same manner as in (2) and (3) of Comparative Example 8 except that 6.0 ml of diethyl 2-methyl-2-isopropyl malonate was replaced with 7.5 ml of di-n-butyl 2-methyl-2-isopropyl malonate in (2) of Comparative Example 8. Table 2 shows the results.

### Comparative Example 10

A solid catalyst component was prepared and propylene was polymerized in the same manner as in (2) and (3) of Comparative Example 8 except that 6.0 ml of diethyl 2-methyl-2-isopropyl malonate was replaced with 6.0 ml of diethyl 2,2-diethyl malonate in (2) of Comparative Example 8. Table 2 shows the results.

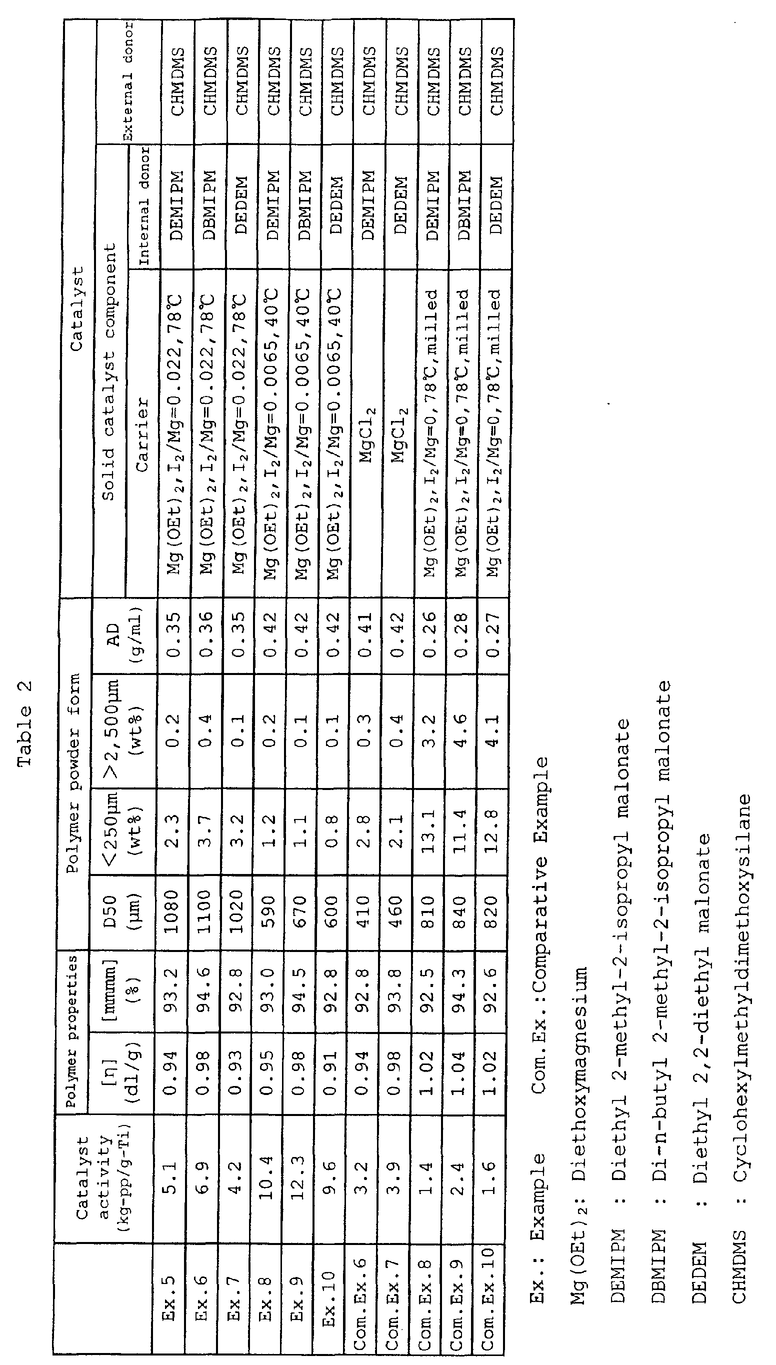

### Industrial Utility

According to the present invention, there can be provided a solid catalyst component for olefin polymerization, which has high polymerization activity and gives an olefin polymer excellent in stereoregularity and powder morphology, a catalyst for olefin polymerization and a method for producing an olefin polymer.

## Claims

1. A solid catalyst component for olefin polymerization, which is obtained by reacting the following compounds (a), (b) and (d), or the following compounds (a), (b), (c) and (d),
(a) a halogen-containing titanium compound,
(b) an alkoxylated magnesium compound obtained by reacting metal magnesium, an alcohol and a halogen and/or halogen-containing compound containing at least 0.0001 gram atom, per mole of said metal magnesium, of a halogen atom,
(c) a halogen-containing silicon compound,
(d) electron-donating compound(s) represented by the following general formula (I) and/or general formula (II), 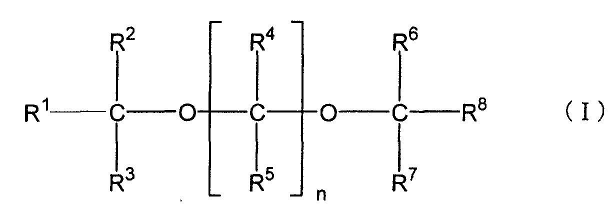
wherein n is an integer of 2 to 10, each of R¹ to R⁸ is independently a substituent having at least one element selected from carbon, hydrogen, oxygen, halogen, nitrogen, sulfur, phosphorus, boron or silicon, any substituents of R¹ to R⁸ may together form a ring other than a benzene ring, and a main chain may contain an atom other than carbon, 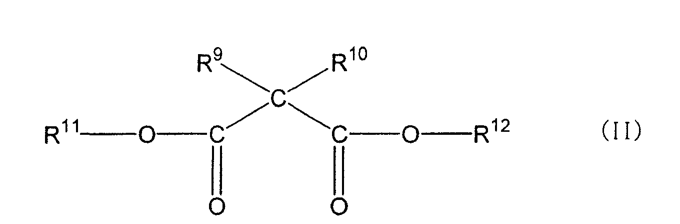 wherein each of R⁹ to R¹² is independently a linear, branched or cyclic alkyl group, or an arylalkyl group, having 1 to 20 carbon atoms, provided that the total sum of carbon atoms of R⁹ and R¹⁰ is 3 to 40.

2. The solid catalyst component for olefin polymerization as recited in claim 1, wherein said halogen is iodine.

3. The solid catalyst component for olefin polymerization as recited in claim 1, wherein said halogen-containing compound is magnesium chloride.

4. The solid catalyst component for olefin polymerization as recited in claim 1, wherein said metal magnesium, the alcohol and the halogen and/or halogen-containing compound are reacted at a temperature of 30 to 90°C.

5. The solid catalyst component for olefin polymerization as recited in claim 4, wherein said metal magnesium, the alcohol and the halogen and/or halogen-containing compound are reacted at a temperature of 30 to 60°C.

6. The solid catalyst component for olefin polymerization as recited in claim 1, wherein said halogen-containing silicon compound (c) is silicon tetrachloride.

7. The solid catalyst component for olefin polymerization as recited in claim 1, wherein the compound of said general formula (I) is a 1,3-diether compound.

8. The solid catalyst component for olefin polymerization as recited in claim 1, wherein the compound of said general formula (II) is a compound of the following general formula (III), 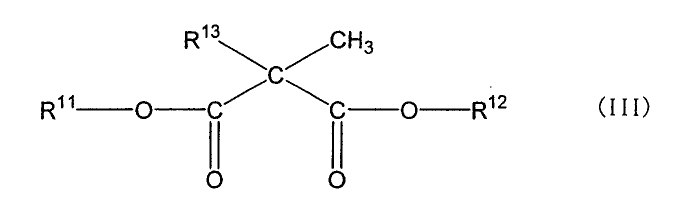 wherein R¹¹ and R¹² are as defined in said general formula (II), and R¹³ is a linear, branched or cyclic alkyl group having 2 to 20 carbon atoms.

9. The solid catalyst component for olefin polymerization as recited in claim 1, wherein said compound (a) is contacted after said compound (b) and said compound (d) are contacted to each other when said compounds (a), (b) and (c) are reacted.

10. The solid catalyst component for olefin polymerization as recited in claim 1, wherein said compound (d) is contacted after said compound (b) and said compound (c) are contacted to each other and then said compound (a) is contacted when said compounds (a), (b), (c) and (d) are reacted.

11. A catalyst for olefin polymerization, comprising the following components [A] and [B], or the following components [A], [B] and [C],
[A] the solid catalyst component for olefin polymerization recited in claim 1,
[B] an organic aluminum compound, and
[C] an electron-donating compound.

12. A method for producing an olefin polymer, which comprises polymerizing an olefin in the presence of the catalyst for olefin polymerization recited in claim 11.
